# EUROPEAN PATENT APPLICATION

(11) **EP 4 717 910 A1**
(43) Date of publication of application: **01.04.2026**
(21) Application number: 24203551.7
(22) Date of filing: 30.09.2024
(51) Int. Cl.: F03D 13/40

(54) **MODULAR HOLDING ARRANGEMENT**

(71) Applicant: Siemens Gamesa Renewable Energy A/S, 7330 Brande (DK)
(72) Inventor: Chuecos, Alcibiades, 7430 Ikast (DK)
(74) Representative: SGRE-Association

(57) **Abstract**

The invention describes a modular holding arrangement (1) for a wind turbine rotor blade (2), comprising a plurality of triangular frames (10), wherein each triangular frame (10) comprises a base (10B), two inclined sides (10S) and an apex (10A); an apex connector (11A) arranged at the apex (10A) of each triangular frame (10); a base connector (11B) arranged at each outer corner of the base (10B) of each triangular frame (10); and wherein an apex connector (11A) is shaped to engage with a base connector (11B). The invention further describes a method of assembling a rotor blade array (A2) using such a modular holding arrangement (1).

## Description

### Background

A wind turbine rotor blade is generally manufactured at a location far removed from its ultimate destination. After completion of manufacture, the rotor blade may need to be stored for some time until it can be transported to another interim destination such as a wind turbine pre-assembly site, a harbour, etc. Because rotor blades can be very long and must be protected from surface damage and also from excessive bending loads, it is of critical importance to correctly support the rotor blades at all stages until it is mounted to the hub of a wind turbine.

This is particularly challenging when it is necessary to organize storage for large numbers of rotor blades, for example when organizing shipping for transport to a subsequent onshore facility, to a wind farm site, etc. However, safe and economical storage of a large number of wind turbine rotor blades is difficult because of the their size and shape. A rotor blade of a present-day wind turbine can have a length in the order of 100 m, a root end diameter in the order of 5 m or more, and its airfoil can be formed with some degree of prebend.

In a simple approach, the rotor blades can be arranged side-by-side in an area that is sufficiently large to accommodate such a single-layer configuration. However, such large spaces may not be available where they are needed, for example at a harbour prior to shipping or after unloading, at a wind farm pre-assembly site, etc. For cost-effective project planning, the storage arrangements must be finalized well in advance so that expensive delays are avoided. The storage duration can be relatively short, for example only a few days or a few weeks, before the rotor blades are moved to their next destination. However, short-term rental or lease contracts can be difficult to arrange for such large areas of land.

It is known to store rotor blades in a dedicated stacking system in which the root end of each rotor blade is held in a root-end frame and its airfoil is held in an airfoil frame. The root-end and airfoil frames have the same outer dimensions and can be stacked vertically. Such a stacking system is intended to support the rotor blades during transport to an installation site, for example by ship to an offshore site, and all parts must therefore be constructed to withstand high loads during handling and transport. Because of these requirements, such a stacking system is unsuitable for a short-term interim storage solution because its cost can even exceed the already significant expense of renting or leasing an area large enough to accommodate a single-level configuration.

Furthermore, such a stacking system itself requires storage space when not in use, but the root-end frames and airfoil frames cannot be disassembled without great effort. This means that a sufficiently large storage space is required, and this can also add significantly to the overall costs.

It is therefore an object of the invention to reduce the storage costs for wind turbine rotor blades.

This object is achieved by the claimed modular holding arrangement and by the claimed method of assembling a rotor blade array for storage.

### Description

The claimed modular holding arrangement comprises several elements which can be assembled in various different configurations to support any number of wind turbine rotor blades.

According to the invention, the modular holding arrangement comprises at least the following components: a plurality of triangular frames, wherein each three-sided frame has a base, two inclined sides, and an apex; an apex connector arranged at the apex of each triangular frame; and a base connector arranged at each outer corner at the base of each triangular frame. Each apex connector is shaped to engage with a base connector.

The inventive modular holding arrangement allows a multilevel or two-dimensional rotor blade array to be assembled in a straightforward and uncomplicated procedure: the inventive method comprises securing each of a plurality of rotor blades in a holding assembly, wherein each holding assembly comprises a triangular frame configured for attaching to the root end of a horizontally-held rotor blade, and a further triangular frame configured for attaching to the airfoil of that rotor blade. During assembly of the array, a holding assembly is connected above and between two adjacent lower-level holding assemblies by engaging the base connectors of the triangular frames of the upper-level holding assembly to the apex connectors of the triangular frames of the lower-level holding assemblies.

In the inventive approach, a triangular array is thus assembled by "docking" the holding assemblies of a rotor blade above and between the holding assemblies of two lower rotor blades. An advantage of the inventive modular holding arrangement is that it enables a rotor blade stacking procedure to be carried out quickly, thereby reducing the costs of crane time. A triangular array of rotor blades can be assembled in a favourably straightforward and uncomplicated manner. The invention also allows much leeway as regards the dimensions of the array, since it does not place any restrictions on the width or height of the triangular array, and the array dimensions can be chosen to suit the available storage space.

Another advantage of the inventive modular holding arrangement is that it can be deployed equally well indoors, for example to assemble a "flat" rotor blade array (with only a few tiers) in a manufacturing facility and outdoors, for example to assemble a "high" rotor blade array (with many tiers) in a dockside yard. A further benefit of the invention is its flexibility, since it allows the assembly of a rotor blade array with any number of units, and the chosen configuration can be customized to requirements.

A further significant advantage of the inventive modular holding arrangement is that its construction is favourably economical. As will be explained below, relatively low material costs are involved in constructing the triangular frames, comparing favourably with the considerable expense of the prior art stacking systems.

Particularly advantageous embodiments and features of the invention are given by the dependent claims, as revealed in the following description. Features of different claim categories may be combined as appropriate to give further embodiments not described herein.

When in use, a triangular frame of the inventive modular holding arrangement is a vertically oriented structure with the form of an isosceles triangle or an equilateral triangle.

The connectors of the triangular frames can realised in any suitable manner, for example by constructing the connectors to achieve a snap-fit, by constructing the connectors as twistlock connectors, etc. Any appropriate male-female design can be used. For example, a female corner casting can be arranged at the apex of each triangular frame, and male twistlocks can be arranged at each outer corner at the base of the triangular frame. In a particularly preferred embodiment of the invention, the connectors engage and disengage without manual assistance. In this way, a rotor blade stack can be assembled quickly and in a straightforward manner. Aligning and engaging the connectors of a holding assembly, and subsequently maintaining the connection, are facilitated by gravity and the weight of the holding assembly. With such a realisation, access to the connectors is not required when assembling a rotor blade stack or array.

The triangular frames of the inventive modular holding arrangement can be constructed to rest on the ground when not connected to "lower-level" triangular frames. In such an embodiment, the base connectors of each triangular frame should be protected in some way to avoid damage (which might prevent a base connector from docking properly to an apex connector). To avoid this additional effort, in a particularly preferred embodiment of the invention the modular holding arrangement further comprises a number of supporting elements or base supports, configured to engage with the base connectors of a triangular frame. For example, a base support can be realised as a rectangular structure or "baseplate", preferably with a footprint that exceeds the footprint of a triangular frame, with recesses to accommodate the base connectors of a triangular frame so that the base of the triangular frame can rest on the baseplate. Alternatively, a base support can comprise two independent support elements, each of which is placed under the outer corners of a triangular frame. Instead of simple recesses, the base support can be equipped with connectors that engage with the base connectors of a triangular frame in the same way as the apex connectors, e.g. the base support can include female corner castings to engage with male twistlocks at the outer corners of a triangular frame.

In a preferred embodiment of the invention, the base supports contribute to the structural stability of the triangular array. This is achieved in a number of ways. In a particularly preferred embodiment of the invention, a base support comprises a levelling means, for example a height-adjustable assembly, which can be deployed to achieve a satisfactorily horizontal basis for a rotor blade array. A height-adjustable base support can be realised in a very simple and cost-effective way, for example by arranging a suitable number of spacers or shims between two robust slabs. In a preferred embodiment of the invention, the levelling means of a base support comprises two concrete slabs, each with the same area and with a thickness in the order of 250 mm - 300 mm, and several thinner shims for placement between the concrete slabs. The shims can be thinner plates of metal, wood or any suitable material, with a thickness in the order of 20 mm. Before placing any rotor blade, the terrain is inspected to identify and corrections needed, and the height-adjustable base supports can be assembled and placed as appropriate. For example, four sets of slabs and shims might be provided for each triangular frame of the lowest array tier, and the slabs and shims are assembled so that that the upper surfaces of the topmost slabs are essentially all in the same horizontal plane.

In an alternative approach, a base support can be in the form of a baseplate arranged under each triangular frame in the lowest tier of the array, and each baseplate can be connected to its neighbouring baseplate. To correct for unevenness in the terrain, each baseplate can be equipped with a suitable height adjustment means, for example threaded "feet" at each outer corner. Here also, this step can be carried out in advance by arranging the desired number of baseplates in the storage area and connecting all pairs of adjacent baseplates. In such an embodiment, each baseplate preferably comprises a lateral connector for connecting to an adjacent baseplate.

A rotor blade can be supported by two triangular frames, one at the root end and one at some point along the airfoil portion of the rotor blade. To this end, the inventive modular holding arrangement preferably comprises a root end interface for attaching a triangular frame to the root end of a rotor blade. The root end interface can comprise a circular plate for attaching to the root end (making use of threaded bushings already provided in the root end, for example), and some means of connecting this plate to two or more sides of a triangular frame. Since the diameter of the root end can be very large, the root end interface is preferably constructed to extend between a vertical triangular frame and the root end of a horizontally-held rotor blade.

Equally, the inventive modular holding arrangement preferably comprises an airfoil interface for attaching a triangular frame to the airfoil of a rotor blade. Such an airfoil interface is preferably constructed to protect the airfoil from damage. In a preferred embodiment of the invention, the airfoil interface comprises an airfoil clamp shaped to fit about the airfoil, and is constructed to fit within a triangular frame.

Preferably, the triangular frames are identical so that any triangular frame can be deployed at the root end of a holding assembly or at the airfoil end of a holding assembly. It follows that an airfoil interface can be attached to any triangular frame and a root end interface can be attached to any triangular frame.

Because the frames are identical and connected at their outer corners when stacked, the shape of a complete multi-tier stack is also triangular (similar triangles). In the triangular configuration, forces are effectively transferred through the structural members and into the ground, so that a rotor blade stack is favourably stable. Because the width of a stack decreases with stack height, and because each higher-level triangular frame is connected to two lower frames, the triangular configuration is highly stable, since side-to-side oscillations of the rotor blade stack cannot develop. This compares favourably to prior art modes of rotor blade stacking. Equally, the base supports used to support the triangular frames are preferably identical.

In a further preferred embodiment of the invention, the base connectors of a triangular frame are detachable. In such an embodiment, base connectors can be left off the triangular frames of any "first tier" holding assemblies, and the triangular frames of those holding assemblies can simply rest on the base supports. It follows that the base supports need not be equipped with connectors for engaging with the triangular frames. This can contribute to a low-cost realisation, since the first tier of a triangular array has the highest number of triangular frames.

These measures can be combined as appropriate to realize a favourably simple and low-cost modular holding arrangement.

A triangular frame can be constructed in any suitable manner, for example using three steel beams, welded or otherwise connected to give an isosceles or equilateral triangle. In a particularly preferred embodiment of the invention, a triangular frame comprises two triangular elements of the same size, and a plurality of spacers arranged to connect the triangular elements. Each triangular element can be assembled by welding three lengths of steel tubing; the two triangular elements can be joined by welding steel spacers in between. Each spacer is welded between two complementary triangle sides, and is perpendicular to both. The spacers may also be made from steel tubing. In this way, a structurally sound triangular frame can be achieved at favourably low cost, since steel tubing is an economical but robust construction material.

In an exemplary embodiment, the triangular frame can have a side length in the order of 7 m, and a depth in the order of 1 m (i.e. the spacers are each about 1 m in length). To ensure a particularly robust array structure, each triangular frame can be equipped with a pair of apex connectors and a pairs of base connectors at each outer corner, whereby each connector pair is spaced apart according to the spacer length.

A further advantage of the inventive modular holding arrangement is that it can easily be adjusted to hold larger rotor blades. For example, in a particularly preferred embodiment of the invention, each side of a triangular frame is extendable, e.g. each side is constructed in two parts which can be connected together to form a "short" side or separated to accommodate an extension in order to form a "long" side. In this way, it is possible to enlarge each triangular frame as required to accommodate a larger rotor diameter and/or a larger airfoil width.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figures 1 - 5 illustrate an exemplary embodiment of the inventive modular holding arrangement;

Figures 6 - 9 show how the inventive modular holding arrangement may be deployed to assemble a rotor blade stack;

Figure 10 shows a side view of a rotor blade array being assembled using the inventive approach;

Figure 11 illustrates a further embodiment of the invention;

Figures 12 and 13 show prior art rotor blade storage solutions.

In the diagrams, like numbers refer to like objects throughout. Objects in the diagrams are not necessarily drawn to scale.

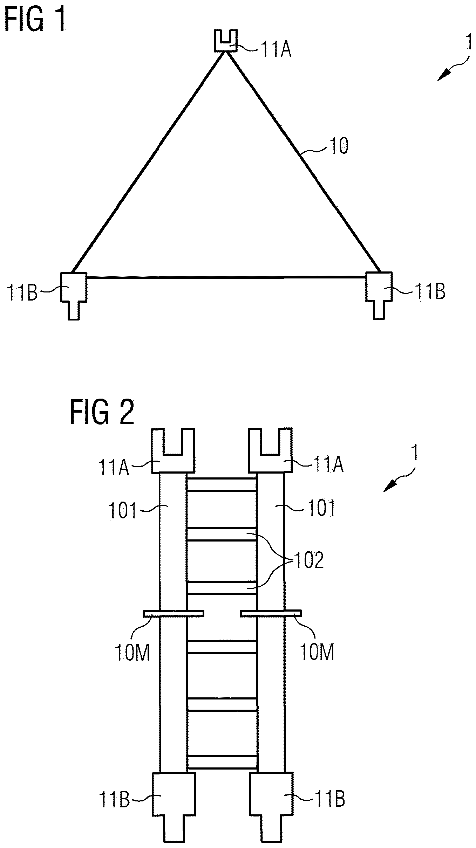

Figures 1 and 2 illustrate an exemplary embodiment of the inventive modular holding arrangement 1. Figure 1 is an elevation view showing a triangular frame 10. The triangular frame 10 essentially has the form of an isosceles triangle (the triangular frame has a horizontal base and two inclined sides 10S of equal length, converging at the apex) or an equilateral triangle (the triangular frame has three sides of equal length). At each outer corner, a base connector 11B is attached to the triangular frame 10. At its apex, an apex connector 11A is attached the triangular frame 10.

Figure 2 shows a side view of the triangular frame 10 of Figure 1. In this exemplary embodiment, the triangular frame 10 has a "double configuration", comprising two vertical triangular elements 101 connected by horizontal spacers 102. The triangular elements 101 are constructed from lightweight but robust structural steel tubing. The spacers 102 may also be lengths of steel tubing. The triangular elements 101 and the spacers 102 can be assembled by welding.

With this "double triangle configuration", a base connector 11B is attached at each outer corner of each triangular element 101, and an apex connector 11A is attached to the apex of each triangular element 101, so that each triangular frame 10 comprises four base connectors 11B and two apex connectors 11A.

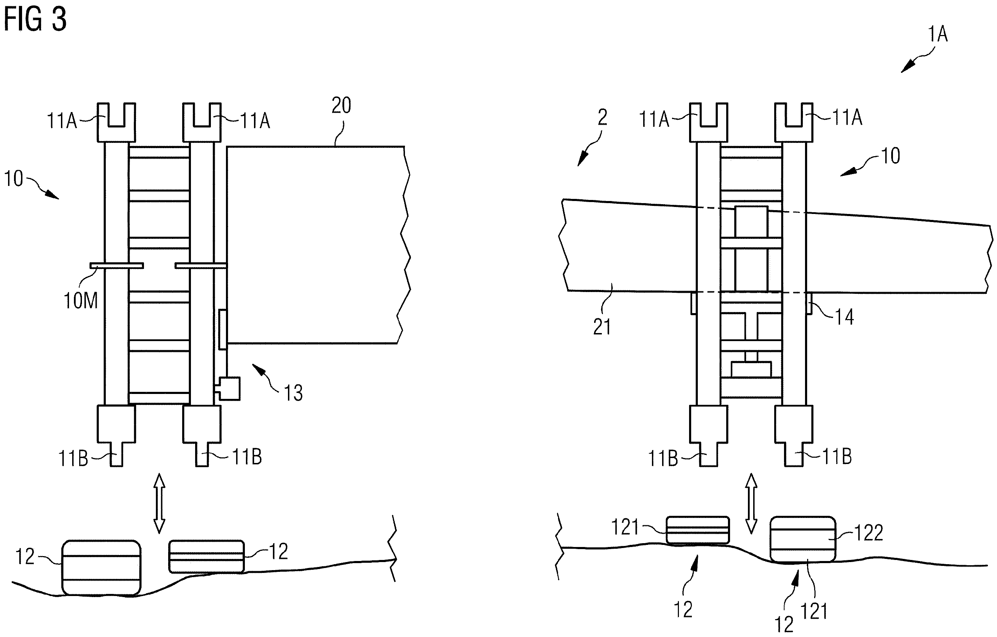

Figures 3 - 5 show how two triangular frames of the inventive modular holding arrangement 1A can be used as a holding assembly to support or hold a wind turbine rotor blade 2. As shown in Figure 3, the root end 20 of the rotor blade 2 is secured to a first triangular frame 10 by means of a suitable interface 13, while the rotor blade airfoil 21 is held in an airfoil clamp assembly 14, which in turn is secured to a second triangular frame 10.

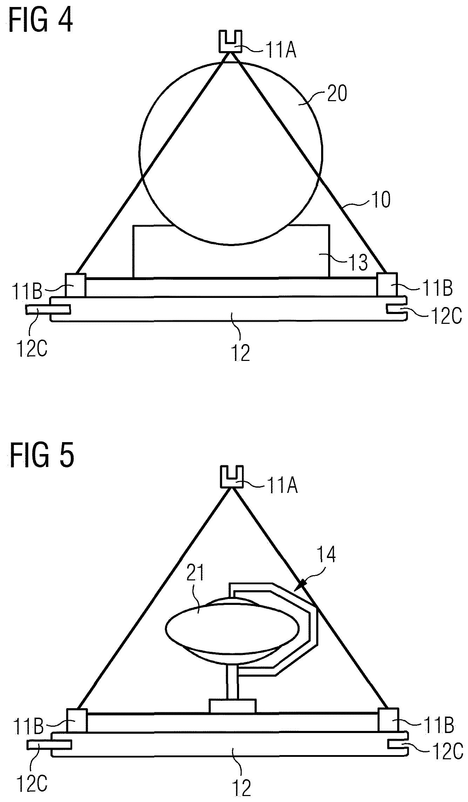

Figure 4 is an elevation view onto the first triangular frame 10, holding the root end 20 of the rotor blade 2, while Figure 5 is an elevation view onto the second triangular frame 10, as a cross-section taken through the airfoil 21.

As Figures 1 - 5 indicate, each of the triangular frames 10 is placed on a base support 12 when forming a holding assembly for a rotor blade 2.

In the embodiment shown in Figure 3, the base support 12 comprise height-adjustable elements 12, each with robust slabs 121 and an appropriate number of shims 122 placed in between to correct for uneven terrain 5. In the embodiment shown in Figures 4 and 5, a base support 12 is a baseplate with a width exceeding the base of the triangular frame 10, and configured to engage with the base connectors 11B of the triangular frame 10. A similar arrangement of base supports 12 can be provided wherever the rotor blade stack is to be assembled. Adjacent baseplates 12 can be connected by lateral connectors 12C as indicated. Of course, to correct for uneven terrain, such baseplates 12 can be arranged on previously prepared base supports of the type shown in Figure 3.

As will be explained in the following diagrams, a holding assembly with base supports 12 can be deployed in the lowest "tier" of a triangular array of rotor blades; equally, a holding assembly without base supports can be deployed in a higher tier of the array by lifting the triangular frames 10 from any base supports used in the assembly stage so that the rotor blade 2 and holding assembly 1 can be raised by crane and lowered into place to dock with two lower holding assemblies 1.

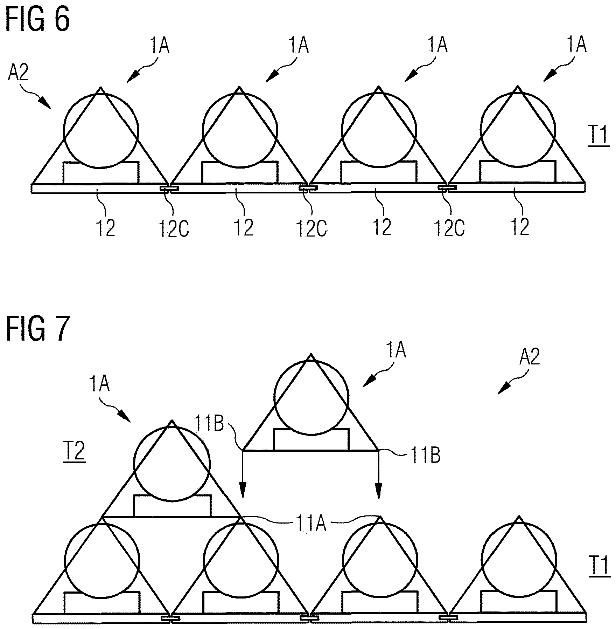

Figure 6 shows an array A2 of four rotor blades 2, each supported as explained in Figures 3 - 5. Here, each triangular frame 10 is mounted to a baseplate 12 as described above. The baseplates 12 underneath adjacent rotor blades 2 are arranged to dock to their neighbouring baseplate(s) 12 so that all four holding assemblies 1A are joined to give a single assembly A2. The array A2 can be extended on either side by docking baseplates 12 of further holding assemblies 1A.

Figure 7 shows a later stage in which a second tier is formed over the first tier of Figure 6. A fifth rotor blade 2 has previously been lowered onto the first tier T1, and a sixth rotor blade 2 is being lowered into place beside the fifth.

As explained above, after attaching a rotor blade 2 to a root-end triangular frame 10 and an airfoil triangular frame 10, the triangular frames 10 can be released from the base supports 12 so that a crane can lift the rotor blade off the base supports 12 and then move it into place over a previously assembled tier. The crane lowers such a holding assembly 1A so that the base connectors 11B of its triangular frames 10 engage with the apex connectors 11A of the triangular frames 10 underneath.

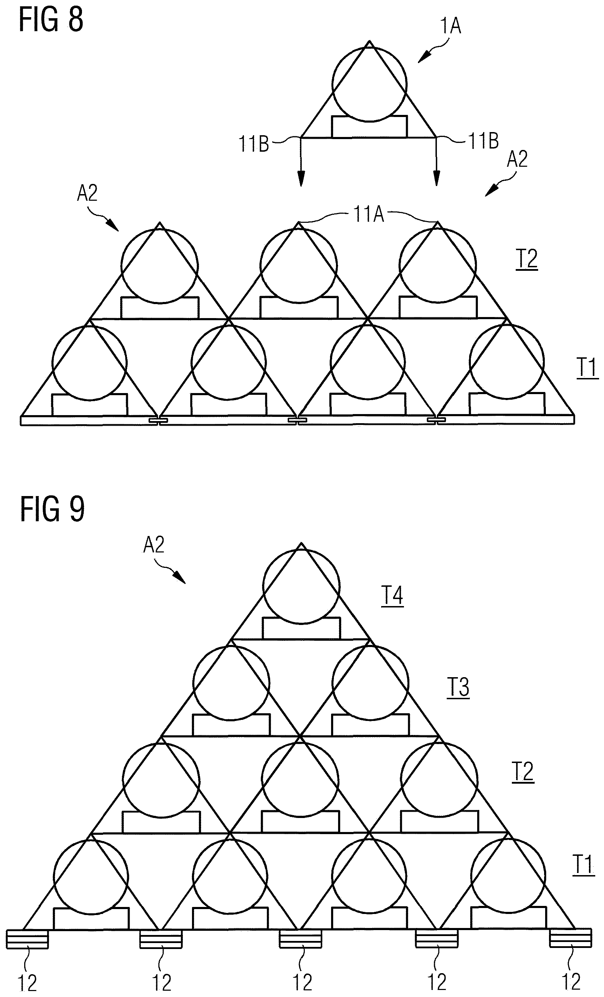

In this way, a triangular array A2 can be assembled, with each tier comprising one less rotor blade than the lower tier. In Figure 8, the second tier T2 is complete and an eighth rotor blade 2 is being lowered into a third tier T3; Figure 9 shows a complete four-tier array A2 of ten rotor blades 2. This diagram shows an arrangement of height-adjustable base supports 12, which has been set up initially to correct for any unevenness in the terrain, before arranging the first row of loaded holding assemblies in the lowest tier T0.

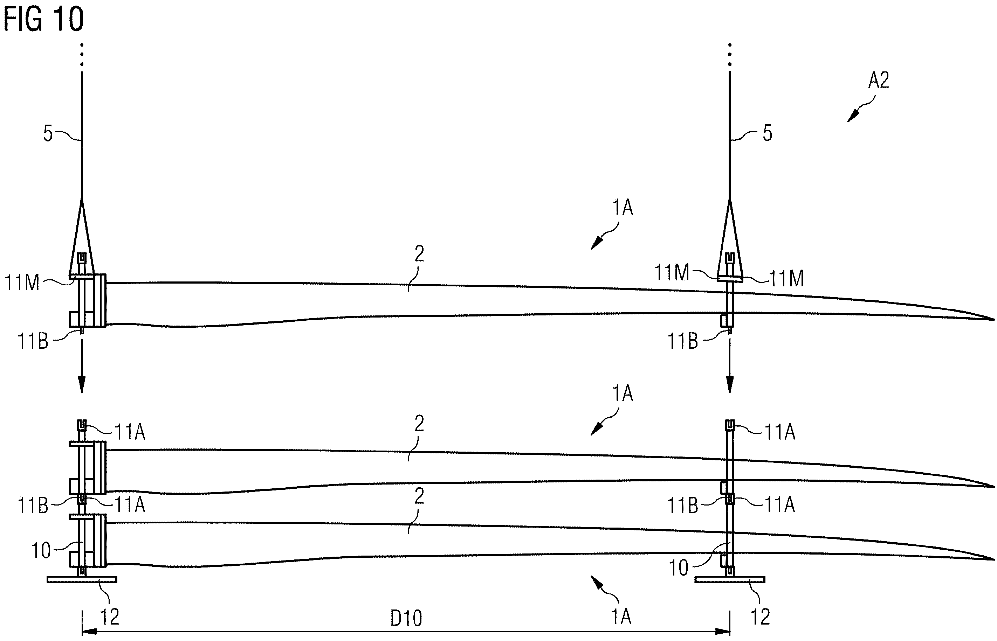

Figure 10 shows a side view of an array A2 of rotor blades 2, showing two previously assembled tiers T1, T2 and a rotor blade 2 being lowered into place on a third tier T3. As described above, each rotor blade 2 is held in a holding assembly 1A. As the diagram clearly shows, the triangular frames 10 of each holding assembly 1A are spaced apart by the same distance D10, so that the base connectors 11B of a holding assembly 1A align with the apex connectors 11A of a lower tier, allowing the holding assembly 1A of the suspended rotor blade 2 (the diagram indicates crane cables 5 connected to lugs 10M of the triangular frames 10) to dock onto triangular frames 10 of two adjacent holding assemblies.

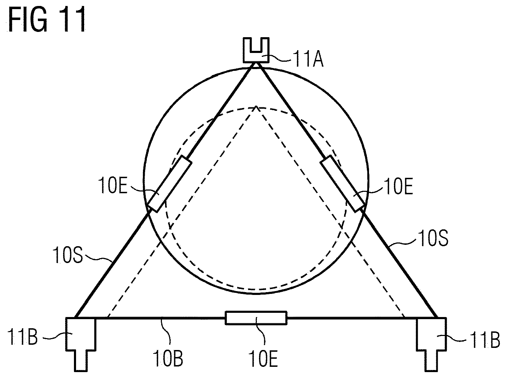

Figure 11 shows a further possible realisation of the inventive modular holding arrangement 1. Here, the size 10S, 10B of the triangular frame 10 can be increased as desired by inserting extensions 10E into each side. In this way, a triangular frame 10 that has been used to hold a rotor blade with a first root end diameter (indicated by the dotted line) can be modified in a straightforward manner to carry a rotor blade with a larger root end diameter and wider airfoil.

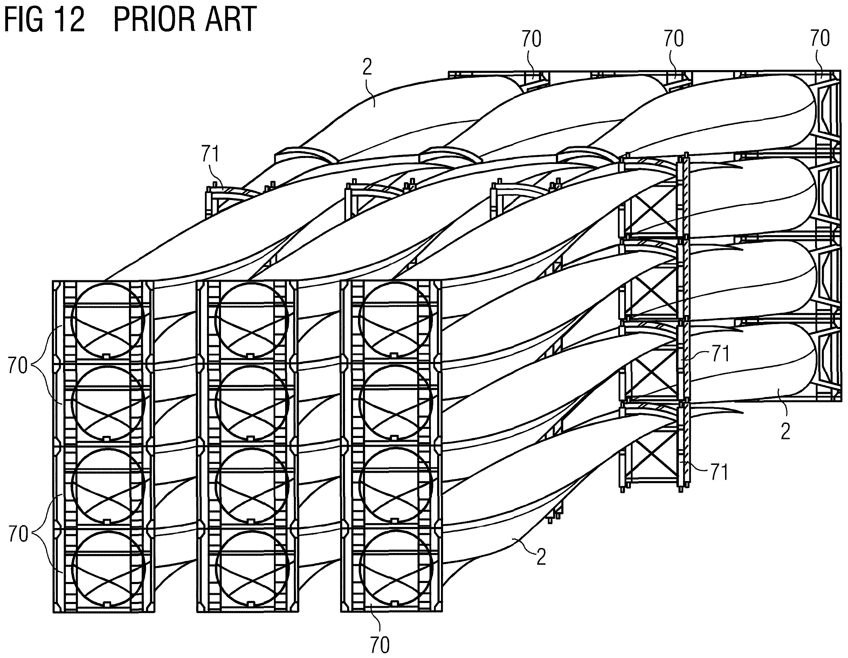

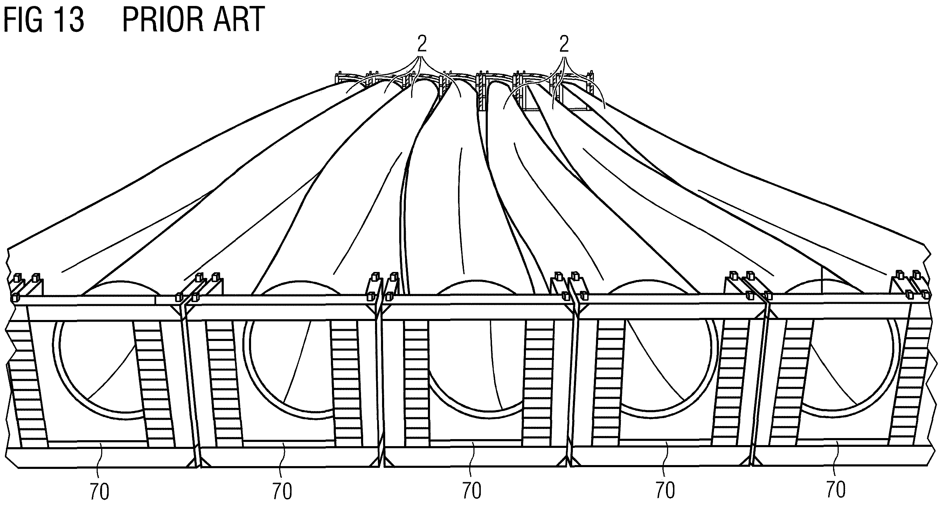

Figure 12 shows a prior art rotor blade stacking system, with stacks of root end frames 70 and airfoil frames 71 as shown. This type of solution may be needed for specific situations such as compact rotor blade stacking on the deck or in the hold of a transport ship. As shown here, twenty-four rotor blades are stacked in an interleaved manner. The root-end frames 70 and airfoil frames 71 must be constructed to withstand high loads during transport, so that the expense of such a stacking system can be very high. For a facility such as a pre-assembly site, the expense of such a specialized stacking system can greatly exceed the cost of short-term renting or leasing an area large enough to accommodate a single-layer configuration for the twenty-four rotor blades of Figure 12, for example as shown in Figure 13. However, the cost of renting or leasing a sufficiently large area can also be unfavourably high, and such costs contribute significantly to the overall cost of installation.

Although the present invention has been disclosed in the form of preferred embodiments and variations thereon, it will be understood that numerous additional modifications and variations could be made thereto without departing from the scope of the invention. For example, the base supports for an array of loaded holding assemblies can be realised in any suitable manner in addition to the realisations described above.

For the sake of clarity, it is to be understood that the use of "a" or "an" throughout this application does not exclude a plurality, and "comprising" does not exclude other steps or elements.

## Claims

1. A modular holding arrangement (1) for a wind turbine rotor blade (2), comprising
- a plurality of triangular frames (10), wherein each triangular frame (10) comprises a base (10B), two inclined sides (10S) and an apex (10A);
- an apex connector (11A) arranged at the apex (10A) of each triangular frame (10);
- a base connector (11B) arranged at each outer corner of the base (10B) of each triangular frame (10); and wherein
- an apex connector (11A) is shaped to engage with a base connector (11B).

2. A modular holding arrangement according to the preceding claim, comprising a plurality of base supports (12), wherein each base support (12) is adapted to support a triangular frame (10).

3. A modular holding arrangement according to any of the preceding claims, wherein a base support (12) comprises a levelling means (121, 122).

4. A modular holding arrangement according to any of the preceding claims, comprising a root end interface (13) for attaching a triangular frame (10) to the root end (20) of a rotor blade (2).

5. A modular holding arrangement according to any of the preceding claims, comprising an airfoil interface (14) for attaching a triangular frame (10) to the airfoil (21) of a rotor blade (2).

6. A modular holding arrangement according to any of the preceding claims, wherein the triangular frames (10) are identical.

7. A modular holding arrangement according to any of the preceding claims, wherein each side (10S, 10B) of a triangular frame (10) is extendable.

8. A modular holding arrangement according to any of the preceding claims, wherein a triangular frame (10) comprises
- a first vertical triangular element (101);
- a second vertical triangular element (101); and
- a plurality of horizontal spacers (102) arranged to connect the vertical triangular elements (101).

9. A modular holding arrangement according to the preceding claim, wherein an apex connector (11A) is arranged at the apex of each vertical triangular element (101).

10. A modular holding arrangement according to any of claims 8 to 9, wherein a base connector (11B) is arranged at each outer corner of the base of each vertical triangular element (101) .

11. A modular holding arrangement according to any of claims 8 to 10, wherein a vertical triangular element (101) is constructed from structural tubing.

12. A method of assembling a rotor blade array (A2) using the modular holding arrangement (1) according to any of claims 1 to 11, comprising steps of
- providing a plurality of holding assemblies (1A), wherein each holding assembly (1A) comprises at least a triangular frame (10) arranged to support the root end (20) of a rotor blade (2) and a further triangular frame (10) arranged to support the airfoil (21) of the same rotor blade (2);
- securing each rotor blade (2) of a plurality of rotor blades in one of the plurality of holding assemblies (1A); and
- connecting a holding assembly (1A) to another holding assembly (1A) by engaging the base connectors (11B) of the triangular frames (10) of a holding assembly (1A) to the apex connectors (11C) of the triangular frames (10) of two adjacent lower-level holding assemblies (1A).

13. A method according to the preceding claim, comprising a preparatory step of providing a horizontal arrangement of base supports (12) to receive holding assemblies (1A) of a first level (T0).

14. A method according to the preceding claim, comprising a step of arranging each triangular frame (10) of the lowest array level (T0) on a base support (12).

15. A method according to any of the preceding method claims, wherein the triangular frames (10) of each holding assembly (1A) are spaced apart by equal distances (D10).
